# EUROPÄISCHE PATENTSCHRIFT

(11) **EP 2 127 029 B1**
(45) Veröffentlichungstag und Bekanntmachung des Hinweises auf die Patenterteilung: **23.04.2014**
(21) Anmeldenummer: 07856677.5
(22) Anmeldetag: 13.12.2007
(51) Int. Cl.: H01R 4/24, H01R 9/24, H01R 12/57, H01R 12/72, H01R 24/64

(54) **ANSCHLUSSKLEMMLEISTE**
TERMINAL STRIP
BORNE DE CONNEXION

(30) Priorität: 18.01.2007 DE 102007002769
(43) Veröffentlichungstag der Anmeldung: 02.12.2009
(73) Patentinhaber: Tyco Electronics Services GmbH, 8200 Schaffhausen (CH)
(72) Erfinder: HETZER, Ulrich, 15831 Mahlow (DE); MÖSSNER, Frank, 12277 Berlin (DE)
(74) Vertreter: Patentanwälte Bressel und Partner mbB
(86) Internationale Anmeldenummer: PCT/EP2007/010931
(87) Internationale Veröffentlichungsnummer: WO 2008/086863

(56) Entgegenhaltungen:
- EP-A- 0 899 823
- EP-A- 1 622 234
- WO-A-2005/064755
- WO-A-2006/053436
- US-B1- 6 213 809

## Beschreibung

Die Erfindung betrifft eine Anschlussklemmleiste gemäß dem Oberbegriff des Anspruchs 1.

Eine Anschlussklemmleiste ist beispielsweise aus der DE 102 57 308 B3 bekannt. Die Anschlussklemmleiste ist dabei als Steckverbinder für Leiterplatten ausgebildet, umfassend eine Anzahl von Kontaktelementen, wobei die Kontaktelemente jeweils zwei Anschlussseiten aufweisen, wobei die eine Anschlussseite als Schneid-Klemm-Kontakt zum Anschließen von Adern und die andere Anschlussseite als Gabel-Kontakt zum Kontaktieren von Anschlussflächen auf einer Leiterplatte ausgebildet ist, und ein Kunststoffgehäuse, in das die Schneid-Klemm-Kontakte der Kontaktelemente einsteckbar sind, wobei der Schneid-Klemm-Kontakt und der Gabelkontakt zueinander verdreht angeordnet sind und mindestens eine Unterkante des Schneid-Klemm-Kontaktes sich am Kunststoffgehäuse abstützt, so dass die Kontaktelemente bei auftretenden Anschaltkräften auf die Schneid-Klemm-Kontakte verliersicher in dem Kunststoffgehäuse gehalten werden. Die Schneid-Klemm-Kontakte liegen dabei zwischen Gehäusewänden, wobei die Schneid-Klemm-Kontakte in einem Winkel von 45° zu den Gehäusewänden ausgerichtet sind, wobei die Schneid-Klemm-Kontakte der Reihe alle parallel zueinander ausgerichtet sind.

Aus der WO 2006/053436 A1 sowie der WO 2005/064755 A1 ist eine Anschlussklemmleiste bekannt, umfassend ein Gehäuse und mindestens vier Schneid-Klemm-Kontakte, wobei die mindestens vier Schneid-Klemm-Kontakte in einer Reihe angeordnet sind, das Gehäuse mit Gehäusewänden ausgebildet ist, zwischen denen die Schneid-Klemm-Kontakte angeordnet sind, wobei die Schneid-Klemm-Kontakte in einem Winkel von 45° zu den Gehäusewänden ausgerichtet sind und jeweils zwei Schneid-Klemm-Kontakte ein Kontaktpaar bilden, wobei die Schneid-Klemm-Kontakte eines Kontaktpaares zueinander parallel ausgerichtet sind, wohingegen benachbarte Schneid-Klemm-Kontakte verschiedener Kontaktpaare um 90° um die Längsachse der Schneid-Klemm-Kontakte gedreht zueinander angeordnet sind und die Schneid-Klemm-Kontakte mit einer Leiterplatte verbunden sind.

Aus der EP 0 899 823 A2 ist eine Anschlussklemmleiste bekannt, umfassend ein Gehäuse und mindestens vier Schneid-Klemm-Kontakte, wobei die mindestens vier Schneid-Klemm-Kontakte in einer Reihe angeordnet sind, das Gehäuse mit Gehäusewänden ausgebildet ist, zwischen denen die Schneid-Klemm-Kontakte angeordnet sind, wobei die Schneid-Klemm-Kontakte in einem Winkel von 45° zu den Gehäusewänden ausgerichtet sind und jeweils zwei Schneid-Klemm-Kontakte ein Kontaktpaar bilden, wobei die Schneid-Klemm-Kontakte eines Kontaktpaares zueinander parallel ausgerichtet sind, wohingegen benachbarte Schneid-Klemm-Kontakte verschiedener Kontaktpaare um 90° um die Längsachse der Schneid-Klemm-Kontakte gedreht zueinander angeordnet sind. Weiter umfasst die Anschlussklemmleiste mindestens eine weitere Reihe von Schneid-Klemm-Kontakten, die parallel zur ersten Reihe der Schneid-Klemm-Kontakte angeordnet ist, wobei gegenüberliegende Schneid-Klemm-Kontakte unterschiedlicher Reihen um 90° um die Längsachse der Schneid-Klemm-Kontakte gedreht zueinander angeordnet sind. Dabei ist der Abstand der Reihen zueinander größer als der größte Abstand zwischen zwei benachbarten Schneid-Klemm-Kontakten einer Reihe.

Aus der US 6,213,809 B1 ist eine Anschlussklemmleiste bekannt, umfassend ein Gehäuse und mindestens vier Schneid-Klemm-Kontakte, wobei die mindestens vier Schneid-Klemm-Kontakte in einer Reihe angeordnet sind, das Gehäuse mit Gehäusewänden ausgebildet ist, zwischen denen die Schneid-Klemm-Kontakte in einem Winkel von 45° zu den Gehäusewänden ausgerichtet sind und jeweils zwei Schneid-Klemm-Kontakte ein Kontaktpaar bilden. Dabei weisen die Gehäusewände zwischen Schneid-Klemm-Kontakten eines Kontaktpaares eine geringere Breite auf als die Gehäusewände zwischen Schneid-Klemm-Kontakten verschiedener Kontaktpaare.

Aus der EP 1 622 234 A1 ist eine Anschlussklemmleiste bekannt, umfassend zwei Reihen von Schneid-Klemm-Kontakten, wobei die Längsachsen der Schneid-Klemm-Kontakte parallel zur Oberfläche einer Leiterplatte ausgerichtet sind, mit der die Schneid-Klemm-Kontakte verbunden sind.

Der Erfindung liegt das technische Problem zugrunde, eine Anschlussklemmleiste mit besserem Übersprechverhalten zu schaffen.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst die Anschlussklemmleiste ein Gehäuse und mindestens vier Schneid-Klemm-Kontakte, wobei die mindestens vier Schneid-Klemm-Kontakte in einer Reihe angeordnet sind, das Gehäuse mit Gehäusewänden ausgebildet ist, zwischen denen die Schneid-Klemm-Kontakte angeordnet sind, wobei die Schneid-Klemm-Kontakte in einem Winkel von 45° zu den Gehäusewänden ausgerichtet sind und jeweils zwei Schneid-Klemm-Kontakte ein Kontaktpaar bilden, wobei die Schneid-Klemm-Kontakte eines Kontaktpaares zueinander parallel ausgerichtet sind, wohingegen benachbarte Schneid-Klemm-Kontakte verschiedener Kontaktpaare um 90° um die Längsachse der Schneid-Klemm-Kontakte gedreht zueinander angeordnet sind. Hierdurch wird die kapazitive Kopplung zwischen Kontakten benachbarter Kontaktpaare reduziert, was zu einer Reduzierung des Übersprechens führt. Anschaulich bilden die beiden benachbarten Kontakte einen Plattenkondensator, wobei der Abstand durch die gegensinnige Schrägstellung sich kontinuierlich vergrößert, was die Kapazität verkleinert. Dabei sei angemerkt, dass der Winkel von 45° aufgrund der Toleranzen des Gehäuses um +/- 5° schwanken kann. Dabei sind die Schneid-Klemm-Kontakte mit einer Leiterplatte verbunden, wobei mindestens ein Kontaktpaar vor der Verbindung mit der Leiterplatte gekreuzt ist.

In einer bevorzugten Ausführungsform weisen die Gehäusewände zwischen Schneid-Klemm-Kontakten eines Kontaktpaares eine geringere Breite auf als die Gehäusewände zwischen Schneid-Klemm-Kontakten verschiedener Kontaktpaare. Auch hierdurch wird die kapazitive Kopplung reduziert.

In einer weiteren bevorzugten Ausführungsform umfasst die Anschlussklemmleiste mindestens eine weitere Reihe von Schneid-Klemm-Kontakten, die parallel zur ersten Reihe der Schneid-Klemm-Kontakte angeordnet ist, wobei gegenüberliegende Schneid-Klemm-Kontakte unterschiedlicher Reihen um 90° um die Längsachse der Schneid-Klemm-Kontakte gedreht zueinander angeordnet sind. Auch hierdurch wird das Übersprechen reduziert.

In einer weiteren bevorzugten Ausführungsform ist der Abstand der Reihen zueinander größer als der größte Abstand zwischen zwei benachbarten Schneid-Klemm-Kontakten einer Reihe. Dabei wird der Abstand vorzugsweise derart gewählt, dass die Schneid-Klemm-Kontakte mit Standard-Anschaltwerkzeugen beschaltet werden können.

Weiter bevorzugt sind die Längsachsen der Schneid-Klemm-Kontakte parallel zur Oberfläche der Leiterplatte ausgerichtet.

In einer weiteren bevorzugten Ausführungsform sind die Schneid-Klemm-Kontakte über SMD-ähnliche Kontakte mit der Leiterplatte verbunden.

Die Erfindung wird nachfolgend anhand eines bevorzugten Ausführungsbeispiels näher erläutert. Die Fig. zeigen:

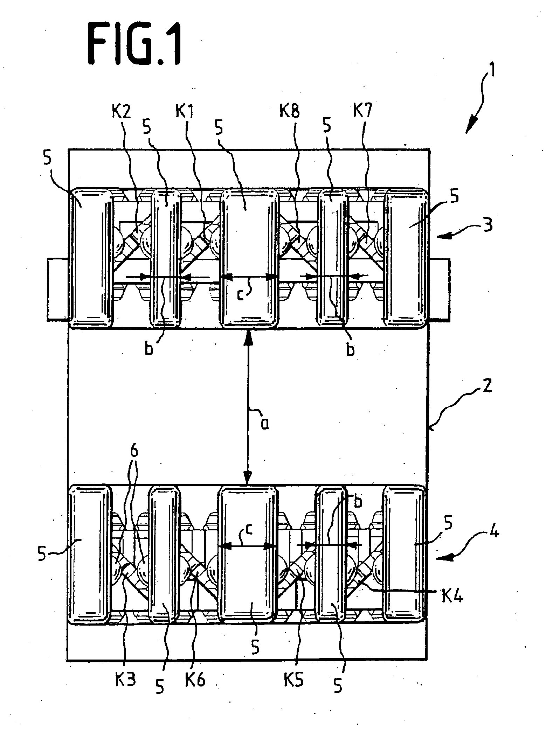

- Fig. 1: eine Draufsicht auf eine Anschlussklemmleiste mit zwei Reihen und
- Fig. 2: eine perspektivische Darstellung der Schneid-Klemm-Kontakte ohne Gehäuse in Verbindung mit einer Leiterplatte.

Die Anschlussklemmleiste 1 umfasst ein Gehäuse 2 mit zwei Reihen 3, 4 von Schneid-Klemm-Kontakten K1-K8. Dabei umfasst die Reihe 3 die Schneid-Klemm-Kontakte K1, K2, K7 und K8, wobei jeweils die Schneid-Klemm-Kontakte K1, K2 sowie K7, K8 ein Kontaktpaar bilden. Entsprechend wird die Reihe 4 von den Schneid-Klemm-Kontakten K3-K6 gebildet, wobei die Schneid-Klemm-Kontakte K3, K6 sowie K4, K5 ein Kontaktpaar bilden. Die beiden Reihen 3, 4 sind parallel zueinander ausgebildet. Des Weiteren umfassen die Reihen 3, 4 unterschiedliche Gehäusewände 5, zwischen den die Schneid-Klemm-Kontakte K1-K8 angeordnet sind, wobei die Schneid-Klemm-Kontakte K1-K8 im Winkel von 45° zu den Gehäusewänden 5 angestellt sind. Dabei sind die Schneid-Klemm-Kontakte K1, K2 zueinander parallel ausgerichtet. Gleiches gilt für die Schneid-Klemm-Kontakte K7, K8; K3, K6 und K4, K5, die jeweils ein Kontaktpaar bilden. Benachbarte Schneid-Klemm-Kontakte, die in einer gemeinsamen Reihe 3, 4 angeordnet sind, jedoch zu unterschiedlichen Kontaktpaaren gehören, also beispielsweise die Schneid-Klemm-Kontakte K1, K8 in Reihe 3 oder die Schneid-Klemm-Kontakte K5, K6 in Reihe 4, sind um 90° um die Längsachse der Schneid-Klemm-Kontakte gedreht zueinander angeordnet. Die Längsachse ist dabei eine Achse, die senkrecht die Papierebene durchstoßen würde. Dabei ist der Abstand b zwischen den Schneid-Klemm-Kontakten eines Kontaktpaares kleiner als der Abstand c zwischen benachbarten Schneid-Klemm-Kontakten verschiedener Kontaktpaare, wobei als Abstand die Breite der Gehäusewände 5 bezeichnet wird. Der Abstand a der Reihe 3 und 4 zueinander ist dabei größer als der Abstand c.

Weiter erkennt man, dass gegenüberliegende Schneid-Klemm-Kontakte aus verschiedenen Reihen, beispielsweise die Schneid-Klemm-Kontakte K2 und K3, ebenfalls um 90° um die Längsachse der Schneid-Klemm-Kontakte gedreht zueinander angeordnet sind.

Des Weiteren sind an den Innenseiten der Gehäusewände 5 Noppen 6 angeordnet, die zum Festhalten der in die Schneid-Klemm-Kontakte eingedrückten Adern dienen.

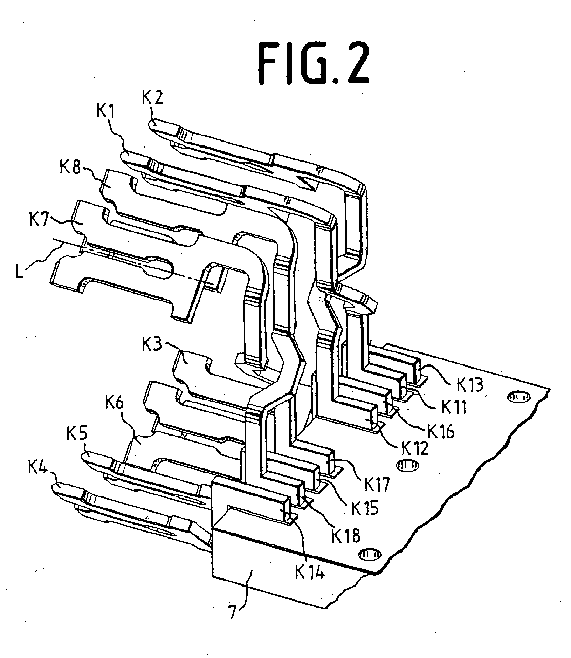

In der Fig. 2 ist nun eine bevorzugte Ausführungsform zur Anbindung der Schneid-Klemm-Kontakte K1-K8 an eine Leiterplatte 7 dargestellt. Hierzu sind die Schneid-Klemm-Kontakte K1-K8 an ihren gegenüberliegenden Enden mit SMD-ähnlichen Kontakten K11-K18 ausgebildet, die vorzugsweise auf der Oberfläche der Leiterplatte 7 verlötet werden. Weiter erkennt man, dass die Schneid-Klemm-Kontakte K1 und K2 sowie K7 und K8 auf ihrem Weg zur Leiterplatte 7 gekreuzt werden, um dadurch das erhöhte Übersprechen zu kompensieren, das aufgrund der längeren Verbindungsstücke zwischen den Schneid-Klemm-Kontakten und den SMD-ähnlichen Kontakten entsteht.

### Bezugszeichenliste

- 1: Anschlussklemmleiste
- 2: Gehäuse
- 3, 4: Reihen
- 5: Gehäusewände
- 6: Noppen
- 7: Leiterplatte
- K1-K8: Schneid-Klemm-Kontakte
- K11-K18: SMD-ähnliche Kontakte

## Patentansprüche

1. Anschlussklemmleiste, umfassend ein Gehäuse und mindestens vier Schneid-Klemm-Kontakte, wobei die mindestens vier Schneidklemm-Kontakte in einer Reihe angeordnet sind, das Gehäuse mit Gehäusewänden ausgebildet ist, zwischen denen die Schneid-Klemm-Kontakte angeordnet sind, wobei die Schneid-Klemm-Kontakte in einem Winkel von 45° zu den Gehäusewänden ausgerichtet sind und jeweils zwei Schneid-Klemm-Kontakte ein Kontaktpaar bilden, wobei die Schneid-Klemm-Kontakte (K1-K8) eines Kontaktpaares (K1, K2; K7, K8; K3, K6; K4, K5) zueinander parallel ausgerichtet sind, wohingegen benachbarte Schneid-Klemm-Kontakte (K1, K8; K5, K6) verschiedener Kontaktpaare um 90° um die Längsachse (L) der Schneid-Klemm-Kontakte (K1-K8) gedreht zueinander angeordnet sind und die Schneid-Klemm-Kontakte (K1-K8) mit einer Leiterplatte (7) verbunden sind,
**dadurch gekennzeichnet, dass**
mindestens ein Kontaktpaar (K1, K2; K7, K8) vor der Verbindung mit der Leiterplatte (7) gekreuzt ist.

2. Anschlussklemmleiste nach Anspruch 1, **dadurch gekennzeichnet, dass** die Gehäusewände (5) zwischen Schneid-Klemm-Kontakten (K1-K8) eines Kontaktpaares (K1, K2; K7, K8; K3, K6; K4, K5) eine geringere Breite (b) aufweisen als die Gehäusewände (5) zwischen Schneid-Klemm-Kontakten (K1, K8; K5, K6) verschiedener Kontaktpaare.

3. Anschlussklemmleiste nach Anspruch 1 oder 2, **dadurch gekennzeichnet, dass** die Anschlussklemmleiste (1) mindestens eine weitere Reihe (4) von Schneid-Klemm-Kontakten (K3-K6) umfasst, die parallel zur ersten Reihe (3) der Schneid-Klemm-Kontakte (K1, K2, K7, K8) angeordnet ist, wobei gegenüberliegende Schneid-Klemm-Kontakte (K2, K3; K1, K6; K8, K5; K7, K4) unterschiedlicher Reihen (3, 4) um 90° um die Längsachse (L) der Schneid-Klemm-Kontakte (K1-K8) gedreht zueinander angeordnet sind.

4. Anschlussklemmleiste nach Anspruch 3, **dadurch gekennzeichnet, dass** der Abstand (a) der Reihen (3, 4) zueinander größer als der größte Abstand (c) zwischen zwei benachbarten Schneid-Klemm-Kontakten einer Reihe (3, 4) ist.

5. Anschlussklemmleiste nach einem der vorangegangenen Ansprüche, **dadurch gekennzeichnet, dass** die Längsachsen (L) der Schneid-Klemm-Kontakte (K1-K8) parallel zur Oberfläche der Leiterplatte (7) ausgerichtet sind.

6. Anschlussklemmleiste nach einem der vorangegangenen Ansprüche, **dadurch gekennzeichnet, dass** die Schneid-Klemm-Kontakte (K1-K8) über SMD-ähnliche Kontakte (K11-K18) mit der Leiterplatte (7) verbunden sind.

## Claims

1. Terminal block, comprising a housing and at least four insulation displacement contacts, the at least four insulation displacement contacts being arranged in a row, the housing being formed with housing walls between which the insulation displacement contacts are arranged, the insulation displacement contacts being aligned at an angle of 45° with respect to the housing walls, and in each case two insulation displacement contacts forming a contact pair, wherein the insulation displacement contacts (K1-K8) of one contact pair (K1, K2; K7, K8; K3, K6; K4, K5) are aligned parallel to one another, whereas adjacent insulation displacement contacts (K1, K8; K5, K6) of different contact pairs are arranged with respect to one another such that they are rotated through 90° about the longitudinal axis (L) of the insulation displacement contacts (K1-K8), and the insulation displacement contacts (K1-K8) are connected to a printed circuit board (7), **characterized in that** at least one contact pair (K1, K2; K7, K8) is crossed over prior to being connected to the printed circuit board (7).

2. Terminal block according to Claim 1, **characterized in that** the housing walls (5) between insulation displacement contacts (K1-K8) of one contact pair (K1, K2; K7, K8; K3, K6; K4, K5) have a smaller width (b) than the housing walls (5) between insulation displacement contacts (K1, K8; K5, K6) of different contact pairs.

3. Terminal block according to Claim 1 or 2, **characterized in that** the terminal block (1) comprises at least one further row (4) of insulation displacement contacts (K3-K6), which is arranged parallel to the first row (3) of insulation displacement contacts (K1, K2, K7, K8), opposite insulation displacement contacts (K2, K3; K1, K6; K8, K5; K7, K4) of different rows (3, 4) being arranged with respect to one another such that they are rotated through 90° about the longitudinal axis (L) of the insulation displacement contacts (K1-K8).

4. Terminal block according to Claim 3, **characterized in that** the gap (a) between the rows (3, 4) is larger than the largest gap (c) between two adjacent insulation displacement contacts in a row (3, 4).

5. Terminal block according to one of the preceding claims, **characterized in that** the longitudinal axes (L) of the insulation displacement contacts (K1-K8) are aligned parallel to the surface of the printed circuit board (7).

6. Terminal block according to one of the preceding claims, **characterized in that** the insulation displacement contacts (K1-K8) are connected to the printed circuit board (7) via SMD-like contacts (K11-K18).

## Revendications

1. Borne de connexion, comprenant un boîtier et au moins quatre contacts autodénudants disposés en rangée, le boîtier étant réalisé avec des parois de boîtier entre lesquelles sont disposés les contacts autodénudants, les contacts autodénudants étant orientés suivant un angle de 45° par rapport aux parois de boîtier et deux contacts autodénudants formant à chaque fois une paire de contacts, les contacts autodénudants (K1-K8) d'une paire de contacts (K1, K2 ; K7, K8 ; K3, K6 ; K4, K5) étant orientés parallèlement l'un à l'autre, tandis que des contacts autodénudants adjacents (K1, K8 ; K5, K6) de différentes paires de contacts étant disposés de manière tournée les uns par rapport aux autres de 90° autour de l'axe longitudinal (L) des contacts autodénudants (K1-K8) et les contacts autodénudants (K1-K8) étant connectés à une carte à circuits imprimés (7),
**caractérisée en ce**
**qu'**au moins une paire de contacts (K1, K2 ; K7, K8) est croisée avant la connexion à la carte à circuits imprimés (7).

2. Borne de connexion selon la revendication 1, **caractérisée en ce que** les parois de boîtier (5) entre les contacts autodénudants (K1-K8) d'une paire de contacts (K1, K2 ; K7, K8 ; K3, K6 ; K4, K5) présentent une plus petite largeur (b) que les parois de boîtier (5) entre des contacts autodénudants (K1, K8 ; K5, K6) de différentes paires de contacts.

3. Borne de connexion selon la revendication 1 ou 2, **caractérisée en ce que** la borne de connexion (1) comprend au moins une rangée supplémentaire (4) de contacts autodénudants (K3-K6), qui est disposée parallèlement à la première rangée (3) de contacts autodénudants (K1, K2, K7, K8), des contacts autodénudants opposés (K2, K3 ; K1, K6 ; K8, K5 ; K7, K4) de différentes rangées (3, 4) étant disposés de manière tournée les uns par rapport aux autres de 90° autour de l'axe longitudinal (L) des contacts autodénudants (K1-K8).

4. Borne de connexion selon la revendication 3, **caractérisée en ce que** la distance (a) entre les rangées (3, 4) est supérieure à la plus grande distance (c) entre deux contacts autodénudants adjacents d'une rangée (3, 4).

5. Borne de connexion selon l'une quelconque des revendications précédentes, **caractérisée en ce que** les axes longitudinaux (L) des contacts autodénudants (K1-K8) sont orientés parallèlement à la surface de la carte à circuits imprimés (7).

6. Borne de connexion selon l'une quelconque des revendications précédentes, **caractérisée en ce que** les contacts autodénudants (K1-K8) sont connectés à la carte à circuits imprimés (7) par le biais de contacts de type montés en surface (K11-K18).
